# FASCICULE DE BREVET EUROPEEN

(11) **EP 4 176 700 B1**
(45) Date de publication et mention de la délivrance du brevet: **09.10.2024**
(21) Numéro de dépôt: 22205589.9
(22) Date de dépôt: 04.11.2022
(51) Int. Cl.: A01B 19/02, A01B 71/02, A01B 39/22

(54) **INSTRUMENT ARATOIRE A DENTS REGLABLES**
LANDWIRTSCHAFTLICHES GERÄT MIT VERSTELLBAREN ZINKEN
AGRICULTURAL DEVICE WITH ADJUSTABLE TEETH

(30) Priorité: 08.11.2021 FR 2111833
(43) Date de publication de la demande: 10.05.2023
(73) Titulaire: Ferrand, 11620 Villmoustaussou (FR)
(72) Inventeur: TROUVEL, Serge, 66000 Perpignan (FR)
(74) Mandataire: Eidelsberg, Olivier Nathan

(56) Documents cités:
- EP-A1- 1 961 283
- EP-A1- 3 403 479
- EP-A1- 3 753 386
- EP-A1- 4 066 608
- DE-U1- 20 115 048

## Description

La présente invention se rapporte aux instruments aratoires.

Dans le domaine de l'agriculture, il est courant d'utiliser des appareils équipés de dents de herse étrilles pour travailler le sol et arracher les mauvaises herbes. Les dents pénètrent dans le sol, agrippent les racines des mauvaises herbes et les arrachent. Les dents sont articulées autour d'un axe de l'appareil, pour s'escamoter à la rencontre d'un obstacle rigide tel qu'une pierre et éviter de les endommager, ainsi que pour suivre le profil du sol. Avec une précharge identique, comme décrit au document EP 1961283, le passage de l'appareil doit être réalisé sur un sol où la culture a un développement racinaire plus important que celui des mauvaises herbes de façon à endommager les mauvaises herbes tout en conservant la culture. Les rangs de la culture que l'on souhaite protéger subissent donc la même pression des dents que les mauvaises herbes.

Ainsi s'il est nécessaire d'augmenter la pression des dents pour plus d'agressivité vis à vis des mauvaises herbes, la culture est également affectée. La culture doit donc être semée en densité plus importante pour compenser les pertes liées au passage de l'appareil. Des systèmes permettent une différence de précharge d'une dent à l'autre, mais il faut retirer ou ajouter ou modifier une pièce du mécanisme. De plus, les roues de l'appareil ainsi que celles du tracteur tassent le sol, les dents ont donc besoin d'une précharge supplémentaire pour réaliser un travail similaire à celui des dents en dehors des traces. Ce réglage de précharge différente d'une dent à l'autre n'est pas possible actuellement sans ajouter ou retirer une pièce du mécanisme. Or cette manipulation demande beaucoup de temps.

La présente invention vise à surmonter les inconvénients mentionnés ci-dessus en proposant un instrument aratoire à déplacer dans un sens d'avancement suivant la revendication 1, notamment comportant une pluralité de dents de herse étrilles coudées dans le sens d'avancement, articulées en biais vers le bas sur un châssis et disposées en plusieurs lignes sur le châssis perpendiculairement au sens d'avancement, les dents étant maintenues en position par un système élastique à précontrainte variable comprenant un ou plusieurs ressorts propres à chaque dent, dont une extrémité est reliée à la dent et dont l'autre extrémité est reliée par un câble à un élément de réglage de la longueur du ressort, chaque câble est reliée individuellement de manière amovible à l'une des positions de l'élément de réglage en comportant plusieurs, de manière à régler la précontrainte indépendamment pour chaque dent.

Des modes de réalisation préférés et/ou des perfectionnements sont définis aux sous-revendications 2 à 10.

La présente invention se rapporte aussi à un procédé suivant la revendication 11.

Suivant un autre aspect de l'invention, qui en soi constitue une invention, mais qui peut être mis en oeuvre de manière favorable en combinaison avec les aspects précédents de l'invention, un instrument aratoire à déplacer dans un sens d'avancement, comportant une pluralité de dents de herse étrilles coudées dans le sens d'avancement, articulées en biais vers le bas sur un châssis et disposées en plusieurs rangées sur le châssis perpendiculairement au sens d'avancement, les dents (3) étant maintenues en position par un système élastique à précontrainte variable comprenant un ou plusieurs ressorts propres à chaque dent, dont une extrémité est reliée à la dent et dont l'autre extrémité est reliée par un câble (6b) à un élément de réglage de la longueur du ressort, caractérisé en ce que chaque câble (6b) est relié individuellement de manière amovible à l'élément de réglage, de manière à régler la précontrainte indépendamment pour chaque dent, le câble étant relié à l'élément de réglage par un élément de liaison, qui peut notamment être un mousqueton, une manille, un crochet en S, un maillon rapide, un crochet avec linguet de sécurité automatique ou analogue.

On utilise cet instrument pour le traitement du sol, en réglant manuellement la longueur du premier ressort d'une première dent à une valeur différente de la longueur du deuxième ressort d'une deuxième dent voisine en réglant l'élément de liaison du premier ressort à une position de son élément de réglage différente de la position de l'élément de liaison du deuxième ressort dans son élément de réglage, sans avoir à ajouter ou retirer une pièce. Le réglage peut s'effectuer rapidement et sans l'aide d'outils.

Grâce au réglage indépendant de la précharge des dents de herse, on peut ainsi protéger la culture en réduisant la précharge des dents qui passent proche ou sur la culture tout en augmentant la précharge des autres dents pour impacter de façon optimale les mauvaises herbes. Il est alors possible de travailler sur un sol où la culture a un développement racinaire semblable à celui des mauvaises herbes, sans pour autant affecter la culture.

De préférence, le câble est relié à l'élément de réglage par un élément de liaison. On peut ainsi facilement régler la longueur du ressort manuellement et sans l'aide d'outils.

De préférence, chaque dent, quelle que soit sa ligne perpendiculaire au sens d'avancement et quelle que soit sa position sur cette ligne, est reliée indépendamment des autres dents à l'élément de réglage et on peut régler manuellement la longueur de son ressort à une valeur différente de la longueur des ressorts des autres dents en réglant l'élément de liaison du ressort de la dent à une position de l'élément de réglage différente de la position de l'élément de liaison des ressorts des autres dents dans l'élément de réglage, sans avoir à ajouter ou retirer une pièce.

On peut ainsi régler chaque dent et indépendamment des autres dents tout en continuant à protéger les cultures des dents prévues pour arracher les mauvaises herbes.

L'élément de réglage peut être un tube avec plusieurs ouvertures sur sa circonférence, un tube avec plusieurs maintiens sur sa circonférence, un arbre muni de plusieurs maintiens issus de sa circonférence, notamment des disques à trous multiples ou un arbre muni de reprises à trous multiples et l'élément de liaison peut être un mousqueton, une manille, un crochet en S, un maillon rapide ou un crochet avec linguet de sécurité automatique.

On peut ainsi régler manuellement les longueurs des ressorts en introduisant simplement un crochet ou équivalent dans une ouverture ou trou.

De préférence, l'instrument est un appareil porté ou traîné pour pouvoir être tracté.

Au dessin annexé, donné à titre d'exemple :
La figure 1 est une vue latérale d'un appareil aratoire comportant 6 rangées de dents perpendiculaires au sens d'avancement, suivant un mode de réalisation de l'invention,
La figure 2 est une vue latérale d'une dent, de son ressort correspondant et d'un moyen de réglage suivant le mode de réalisation de la figure 1,
La figure 3 est une vue à plus grande d'une partie de la figure 2,
La figure 4 est une vue latérale du même genre que celle de la figure 3 d'un appareil aratoire comportant un moyen de réglage suivant un autre mode de réalisation de l'invention,
La figure 5 est une vue latérale identique à la figure 3, à l'exception du moyen de réglage qui suivant un autre mode de réalisation de l'invention, utilise un crochet en S à la place du mousqueton du mode de réalisation des figures 1 à 3.
La figure 6 est une vue latérale identique à la figure 3, à l'exception du moyen de réglage qui suivant un autre mode de réalisation de l'invention, utilise un maillon rapide à la place du mousqueton du mode de réalisation des figures 1 à 3.
La figure 7 est une vue latérale identique à la figure 3, à l'exception du moyen de réglage qui suivant un autre mode de réalisation de l'invention, utilise un crochet avec linguet de sécurité automatique à la place du mousqueton du mode de réalisation des figures 1 à 3,
La figure 8 est une vue latérale du même genre que celles des figures 3 à 7 d'un appareil aratoire comportant un moyen de réglage suivant encore un autre mode de réalisation de l'invention,
La figure 9 est une vue de dessus d'un appareil aratoire sensiblement identique à celui de la figure 1, dont seule la partie latérale gauche est en position d'utilisation, tandis que la partie latérale gauche a été relevée verticalement, en position repliée pour le transport,
La figure 10 est une vue de dessus de la partie latérale gauche seule de l'appareil de la figure 9, constituée de deux sous panneaux gauche, à savoir un sous panneau d'extrémité gauche et un sous panneau intermédiaire gauche, ces deux panneaux étant reliés ensemble pour former un panneau gauche constituant la partie latérale gauche,
La figure 11 est une vue en perspective de dessus du sous panneau d'extrémité gauche de l'appareil des figures 9 et 10, et
La figure 12 est une vue à plus grande échelle d'une partie de la figure 11.

L'appareil 1 suivant l'invention à déplacer dans un sens d'avancement comporte un châssis 2 allant d'un essieu arrière à un attelage avant, sur lequel sont articulées en biais vers le bas suivant une ligne perpendiculaire au sens d'avancement des dents 3 de herse étrille coudées dans le sens d'avancement. Chaque dent 3 de la ligne est également décalée latéralement par rapport aux dents des autres lignes perpendiculaires au sens d'avancement. Chaque dent 3 comporte au-dessus du coude une boucle 4 à laquelle est relié un ressort 5 se terminant par un crochet 6a pénétrant dans la boucle 4. Un plat 9, notamment en caoutchouc, percé de deux trous pour sa coopération avec la boucle 4, assure le maintien du crochet 6a en l'empêchant de sortir de la boucle 4 par glissement.

Chaque dent comporte un élément 7 ;71 ;75 indépendant de réglage des longueurs des ressorts disposés sur le châssis 2 à l'avant de l'appareil 1. Chaque ressort 5 est relié au dispositif de réglage par un câble 6b. Les câbles 6b de chaque dent 3 disposent d'un élément 8 ;81 ;82 ;83 ;84 de liaison indépendant des autres dents 3.

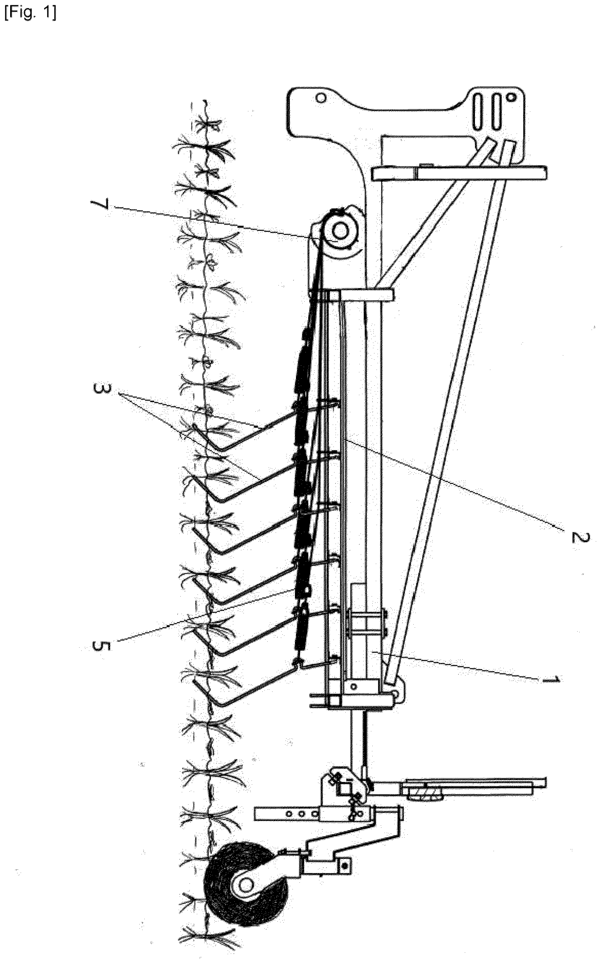

Suivant un mode de réalisation représenté aux figures 1, 2 et 3, l'élément de réglage est un anneau 7 tubulaire ayant plusieurs ouvertures sur sa circonférence, et l'élément de liaison est un mousqueton 8. Pour chaque position possible du mousqueton 8, il est prévu un couple d'ouvertures, constitué d'une part d'un trou 7a, 7b, 7c de petite section sensiblement égale à la section du mousqueton, et d'une ouverture 7a', 7b', 7c', de préférence de forme oblongue, notamment de section transversale plus grande que celle du trou 7a, 7b, 7c pour faciliter la mise en place du mousqueton 8.

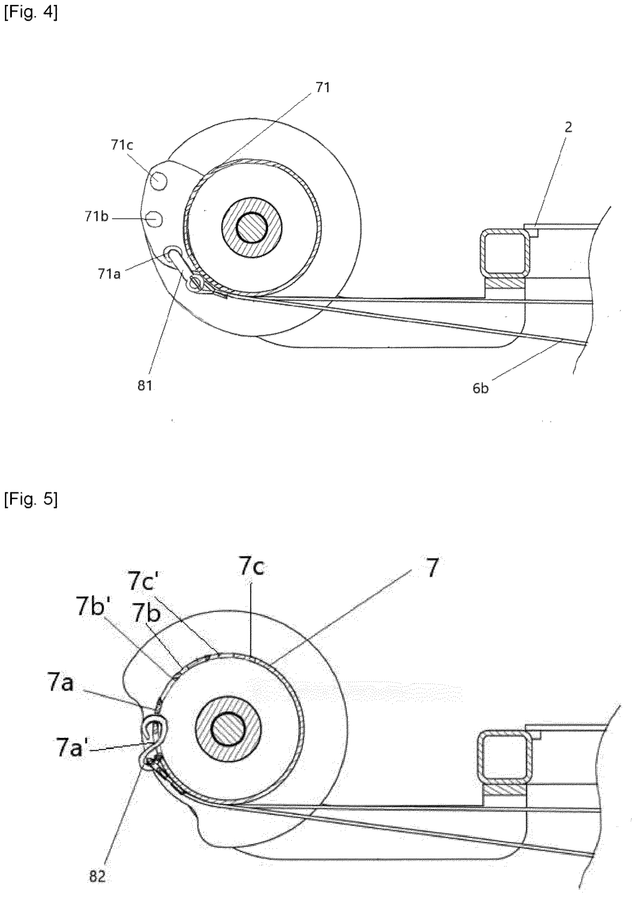

Suivant un autre mode de réalisation représenté à la figure 4, l'élément de réglage est un arbre 71 muni de reprise à trous 71a, 71b, 71c multiples, et l'élément de liaison est une manille 81.

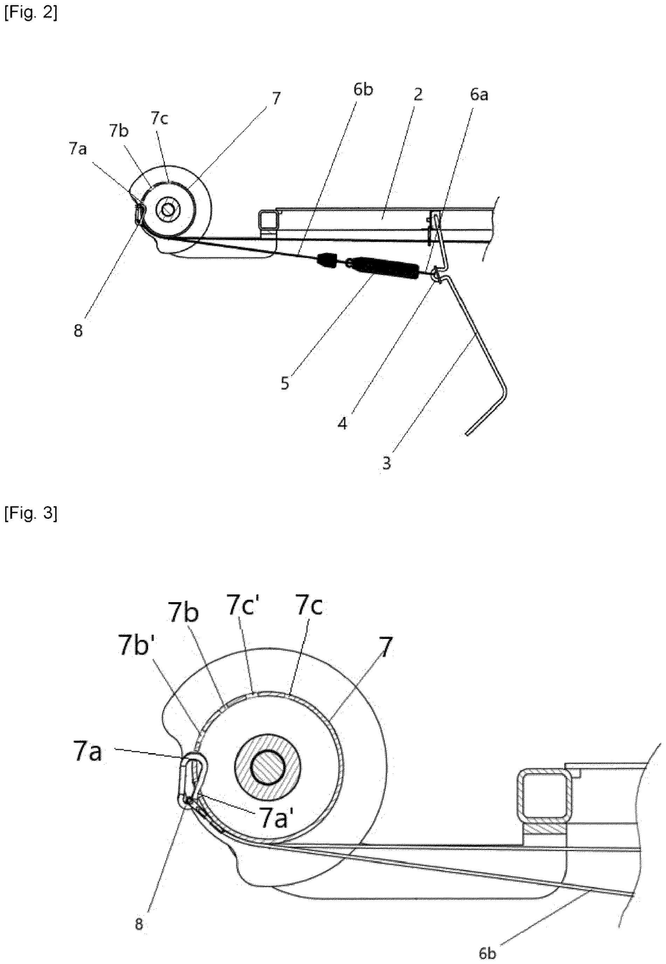

Suivant un autre mode de réalisation représenté à la figure 5, l'élément de réglage est constitué de l'anneau 7 tubulaire, l'élément de liaison étant un crochet 82 en S en remplacement du mousqueton 8 de la figure 3.

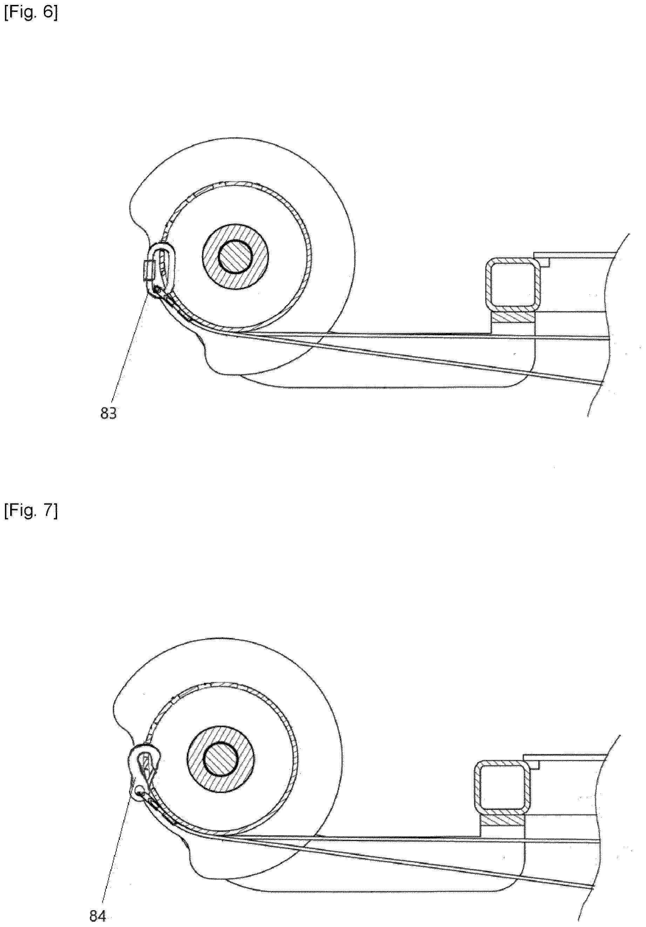

Suivant un autre mode de réalisation représenté à la figure 6, l'élément de liaison est un maillon 83 rapide, en remplacement du mousqueton 8 de la figure 3.

Suivant un autre mode de réalisation représenté à la figure 7, l'élément de liaison est un crochet 84 avec linguet de sécurité automatique, en remplacement du mousqueton 8 de la figure 3.

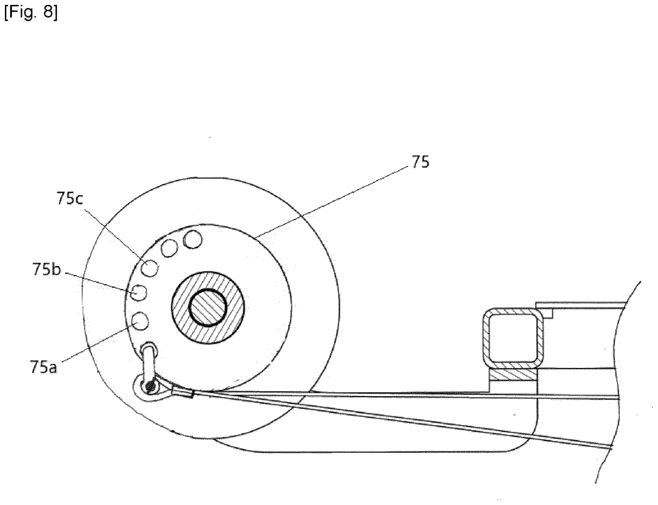

Suivant un autre mode de réalisation représenté à la figure 8, l'élément de réglage est un arbre 75 muni de disques à trous 75a, 75b, 75c multiples s'étendant parallèlement les uns aux autres, à distance les uns des autres, le long de l'arbre 75.

Suivant la position de l'élément de liaison dans l'élément de réglage, le ressort 5 est précontraint à une certaine valeur déterminée à l'avance et par conséquent la dent 3 maintenue dans le sol applique une force déterminée à l'avance aux mauvaises herbes.

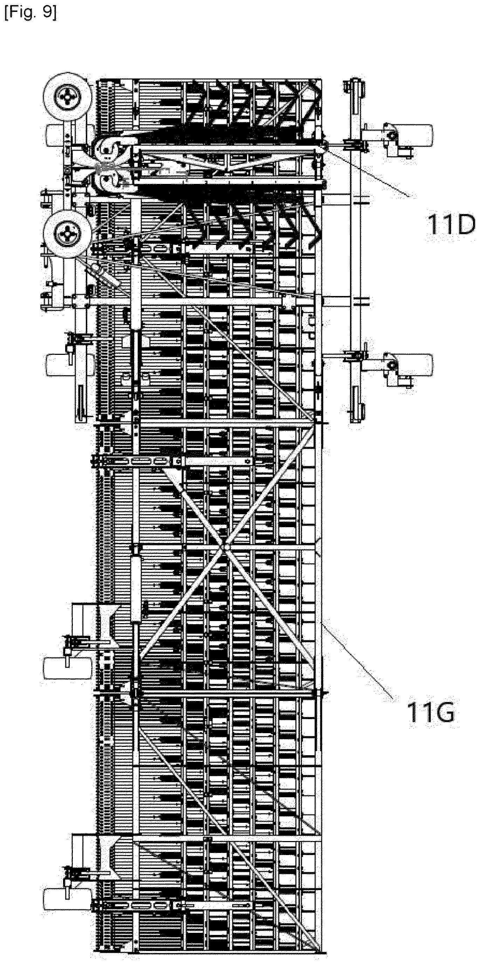

Aux figures 9 à 12, il est représenté un instrument aratoire sensiblement identique à celui de la figure 1, les différences étant principalement sur la forme des ressorts (ressorts doubles à la figure 1 et ressorts simples aux figures 9 à 12) et la liaison entre chaque étrille 3 et son ressort associé, la boucle 4 et le plat 9 de la figure 1 étant remplacé par une boucle fermée).

L'instrument est constitué de deux panneaux latéraux gauche et droit 11G et 11D, qui chacun peuvent être rabattus verticalement pour le transport. A la figure 9, le panneau droit 11D est dans la position rabattue tandis que le panneau gauche 11G est dans la position horizontale d'utilisation.

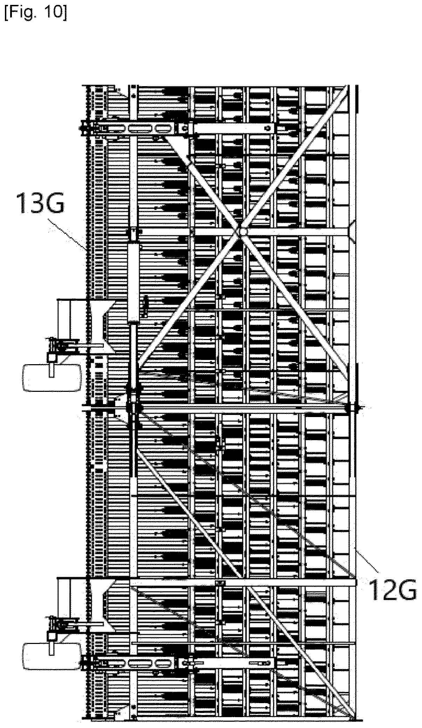

Chaque panneau latéral 11G et 11D est constitué de deux sous panneaux intermédiaire et d'extrémité fixés de manière pivotante l'un à l'autre de manière à pouvoir être rabattu l'un sur l'autre pour ensuite être pivotés ensemble à la verticale. A la figure 10, il est représenté le panneau latéral gauche, constitué d'un sous panneau 12G d'extrémité et d'un sous panneau 13G intermédiaire.

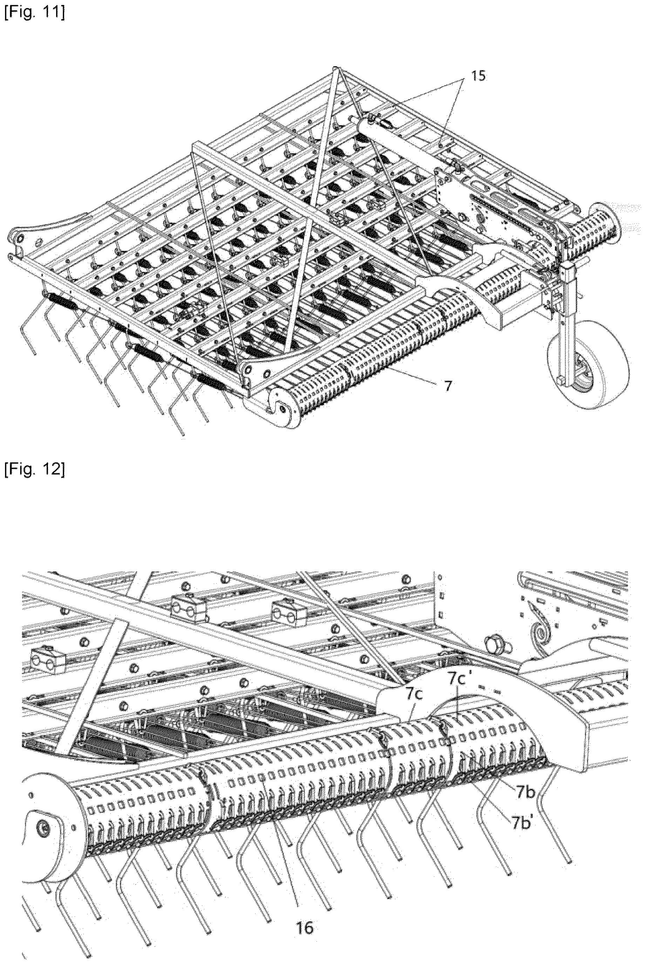

A la figure 11, il est représenté en perspective le sous panneau 13G intermédiaire. Le sous panneau 13G comporte six rangées de dents 3, chaque rangée s'étendant dans la direction horizontale perpendiculaire à la direction d'avancement. Les dents d'une rangée donnée sont montées chacune articulée à une traverse 15 respective du châssis 1 du sous panneau.

Dans la direction d'avancement, les dents ne sont pas alignées de manière rectiligne, mais décalées les unes par rapport aux autres d'une travers à l'autre pour ainsi assurer une couverture maximale du sol par les dents.

Chaque sous panneau comporte son propre anneau tubulaire 7 qui est percé d'ouvertures 7a, 7b, 7c, 7a', 7b' et 7c', destinées, pour chaque câble 6b de chaque dent, à recevoir un mousqueton dans trois positions possibles, correspondant à une coopération du mousqueton avec soit les ouvertures 7a, 7a', soit les ouvertures 7b, 7b', soit les ouvertures 7c, 7c'.

A la figure, il est prévu 6 rangées comportant chacune entre 12 et 14 dents, décalées les unes par rapports aux autres. Le nombre de triplets d'ouvertures 7a, 7a' ; 7b, 7b' ; 7c et 7c' est égal au nombre de dents du sous panneau, de sorte chaque dent peut être réglées dans l'une des trois positions indépendamment du réglage des autres dents.

Cette possibilité de réglage indépendant est illustrée par exemple à la figure 12 dans laquelle on peut voir que trois des dents ont leur mousqueton qui ne sont pas alignés avec les autres mousquetons.

Les ouvertures 7a, 7b, 7c ont une extension le long de la périphérie de l'anneau tubulaire (c'est-à-dire en section transversale représentée par exemple à la figure 3) qui est moindre que celles des ouvertures 7a', 7b', 7c', qui notamment ont des formes de fentes longitudinales ou oblongues alors que les ouvertures 7a, 7b, 7c ont une forme sensiblement circulaire, de dimension sensiblement égale à celle des mousquetons.

Cette différence des dimensions en section des ouvertures, bien que non nécessaires à l'invention, présente cependant l'avantage de simplifier la mise en place rapide des mousquetons ou des autres éléments équivalents.

Enfin, il est prévu des ouvertures 16 d'évacuation de la terre, représentées de forme carrée aux figures, mais qui pourraient avoir toute autre forme. Ces ouvertures permettent l'évacuation de la terre qui peut s'introduire à l'intérieur du tube lors de l'utilisation de l'instrument aratoire.

Comme on le voit en particulier à la figure 12, l'anneau tubulaire ou tube 7 comporte des rangées d'ouvertures traversantes formées dans la paroi latérale du tube, à savoir plusieurs couples de rangées constitués chacun d'une part d'une rangée d'ouvertures (telles que 7a, 7b ou 7c) de forme sensiblement circulaire et notamment sensiblement identique, en un peu plus grande, à la section d'un mousqueton pour y permettre son passage à travers et d'autre part d'une rangée d'ouvertures de plus grande section, notamment en forme de fentes, pour simplifier l'introduction du mousqueton et sa fixation amovible à l'anneau tubulaire par l'intermédiaire d'un couple associé de deux ouvertures de deux rangées contigües, les deux ouvertures du couple associé se trouvant au niveau de la même section transversale (perpendiculaire à l'axe longitudinal du tube) du tube.

Les couples de rangées sont répartis, notamment de manière uniforme le long de la périphérie du tube, de sorte que pour chaque mousqueton (ou son équivalent de fixation telle qu'une boucle fermée, un linguet, un crochet ou analogue) plusieurs positions de fixation au tube sont disponibles le long de la périphérie dans une section transversale donnée.

Les couples de rangées sont séparés les uns des autres par des rangées d'ouvertures 16 d'évacuation de la terre, représentées de forme carrée aux figures, mais qui pourraient avoir toute autre forme.

A la figure 12, on ne distingue que deux couples de rangées de fixation et une rangée d'ouvertures d'évacuation, mais bien évidemment on peut en prévoir un lus grand nombre, notamment 3 ou 4 couples de rangées, pour ainsi définir pour chaque dent 3 ou 4 positions de réglage de précontrainte. On pourrait également prévoir encore plus de rangées, notamment en en prévoyant sur tout le pourtour du tube et/ou en jouant sur les dimensions des mousquetons ou équivalents, des ouvertures, des espacements entre les différentes rangées ainsi que sur la dimension du tube.

## Revendications

1. Instrument aratoire à déplacer dans un sens d'avancement, comportant une pluralité de dents (3) de herse étrilles coudées dans le sens d'avancement, articulées en biais vers le bas sur un châssis (2), en étant disposées en plusieurs lignes et/ou rangées sur le châssis (2), les dents (3) étant maintenues en position par un système élastique à précontrainte variable, **caractérisé en ce que** il est prévu des moyens (7 ; 71 ; 75) de réglage de la précontrainte de chaque dent indépendamment de celles des autres dents (3).

2. Instrument suivant la revendication 1, **caractérisé en ce que** le système élastique à précontrainte variable comprend au moins un ressort (5) propre à chaque dent (3), dont une extrémité est reliée à la dent (3) et dont l'autre extrémité est reliée par un câble (6b) aux moyens (7 ; 71 ; 75) de réglage, chaque câble (6b) étant relié individuellement de manière amovible aux moyens (7 ; 71 ; 75) de réglage, indépendamment des câbles des autres dents.

3. Instrument suivant la revendication 2, **caractérisé en ce que** les moyens de réglage comportent un tube (7) définissant plusieurs points de liaison possibles pour chaque câble (6b).

4. Instrument suivant la revendication 3, **caractérisé en ce que** chaque point de liaison comporte au moins une ouverture (7a ; 7a' ; 7b ; 7b' ; 7c ; 7c') formée dans la surface latérale du tube (7).

5. Instrument suivant la revendication 4, caractérisé en que chaque point de liaison comporte deux ouvertures (7a, 7a' ; 7b, 7b' ; 7c, 7c') formées dans la surface latérale du tube (7).

6. Instrument suivant la revendication 4, **caractérisé en ce qu'**une (7a' ; 7b' ; 7c') des deux ouvertures a la forme d'une fente allongée et est de plus grande dimension que l'autre (7a ; 7b ; 7c) des deux ouvertures.

7. Instrument aratoire suivant l'une des revendications 2 à 6, **caractérisé en ce que** chaque câble (6b) est relié aux moyens (7 ; 71 ; 75) de réglage par un élément (8 ; 81 ; 82 ; 83 ; 84) respectif de liaison.

8. Instrument aratoire suivant la revendication 2, caractérisé en que les moyens de réglage comportent un arbre (75) muni de plusieurs disques à trous (75a,75b,75c) multiples, chaque disque étant associé à un câble.

9. Instrument aratoire suivant l'une des revendications 7 ou 8, **caractérisé en ce que** l'élément de liaison est un mousqueton (8), une manille (81), un crochet (82) en S, un maillon (83) rapide, ou un crochet (84) avec linguet de sécurité automatique.

10. Instrument aratoire suivant l'une des revendications précédentes, **caractérisé en ce que** c'est un instrument (1) porté ou traîné.

11. Procédé de traitement du sol par un instrument aratoire suivant l'une des revendications 2 à 10, dans lequel
on règle manuellement la longueur du premier ressort (5) d'une première dent (3) à une valeur différente de la longueur du deuxième ressort (5) d'une deuxième dent (3) voisine en reliant le câble (6b) de la première dent aux moyens de réglages, notamment au tube de réglage, en une position choisie parmi la pluralité de positions possibles pour cette première dent, et en reliant le câble de la deuxième dent aux moyens de réglages en une position choisie parmi la pluralité de positions possibles pour cette deuxième dent, la position choisie pour la liaison du câble de la première dent étant décalée dans le sens d'avancement par rapport à la position choisie pour la liaison du câble de la deuxième dent.

## Patentansprüche

1. Landwirtschaftliches Gerät, welches in einer Fortbewegungsrichtung zu bewegen ist und mehrere in der Fortbewegungsrichtung abgewinkelte Striegeleggenzinken (3) aufweist, die schräg nach unten an einem Gestell (2) angelenkt sind, wobei sie in mehreren Linien und/oder Reihen an dem Gestell (2) angeordnet sind, wobei die Zinken (3) durch ein elastisches System mit variabler Vorspannung in Position gehalten werden, **dadurch gekennzeichnet, dass** Mittel (7; 71; 75) zur Verstellung der Vorspannung jedes Zinkens unabhängig von denjenigen der anderen Zinken (3) vorgesehen sind.

2. Gerät nach Anspruch 1, **dadurch gekennzeichnet, dass** das elastische System mit variabler Vorspannung jeweils mindestens eine eigene Feder (5) für jeden Zinken (3) umfasst, von der ein Ende mit dem Zinken (3) verbunden ist und von der das andere Ende durch ein Kabel (6b) mit den Mitteln (7; 71; 75) zur Verstellung verbunden ist, wobei jedes Kabel (6b) einzeln lösbar mit den Mitteln (7; 71; 75) zur Verstellung verbunden ist, unabhängig von den Kabeln der anderen Zinken.

3. Gerät nach Anspruch 2, **dadurch gekennzeichnet, dass** die Mittel zur Verstellung ein Rohr (7) aufweisen, das mehrere mögliche Verbindungspunkte für jedes Kabel (6b) definiert.

4. Gerät nach Anspruch 3, **dadurch gekennzeichnet, dass** jeder Verbindungspunkt mindestens eine Öffnung (7a; 7a'; 7b; 7b'; 7c; 7c') aufweist, die in der Seitenfläche des Rohres (7) ausgebildet ist.

5. Gerät nach Anspruch 4, **dadurch gekennzeichnet, dass** jeder Verbindungspunkt zwei Öffnungen (7a; 7a'; 7b; 7b'; 7c; 7c') aufweist, die in der Seitenfläche des Rohres (7) ausgebildet sind.

6. Gerät nach Anspruch 4, **dadurch gekennzeichnet, dass** eine (7a'; 7b'; 7c') der zwei Öffnungen die Form eines lang gestreckten Schlitzes hat und größere Abmessungen als die andere (7a; 7b; 7c) der zwei Öffnungen aufweist.

7. Landwirtschaftliches Gerät nach einem der Ansprüche 2 bis 6, **dadurch gekennzeichnet, dass** jedes Kabel (6b) mit den Mitteln (7; 71; 75) zur Verstellung durch ein jeweiliges Verbindungselement (8; 81; 82; 83; 84) verbunden ist.

8. Landwirtschaftliches Gerät nach Anspruch 2, **dadurch gekennzeichnet, dass** die Mittel zur Verstellung eine Welle (75) aufweisen, die mit mehreren Scheiben mit mehreren Löchern (75a, 75b, 75c) versehen ist, wobei jede Scheibe einem Kabel zugeordnet ist.

9. Landwirtschaftliches Gerät nach einem der Ansprüche 7 oder 8, **dadurch gekennzeichnet, dass** das Verbindungselement ein Karabiner (8), ein Schäkel (81), ein S-förmiger Haken (82), ein Schließring (83) oder ein Haken (84) mit automatischer Hakensicherung ist.

10. Landwirtschaftliches Gerät nach einem der vorhergehenden Ansprüche, **dadurch gekennzeichnet, dass** es ein getragenes oder gezogenes Gerät (1) ist.

11. Verfahren zur Bodenbearbeitung mit einem landwirtschaftlichen Gerät nach einem der Ansprüche 2 bis 10, wobei
die Länge der ersten Feder (5) eines ersten Zinkens (3) manuell auf einen Wert eingestellt wird, der von der Länge der zweiten Feder (5) eines benachbarten zweiten Zinkens (3) verschieden ist, indem das Kabel (6b) des ersten Zinkens mit den Mitteln zur Verstellung, insbesondere mit dem Verstellrohr, in einer Position verbunden wird, die aus den mehreren möglichen Positionen für diesen ersten Zinken ausgewählt ist, und indem das Kabel des zweiten Zinkens mit den Mitteln zur Verstellung in einer Position verbunden wird, die aus den mehreren möglichen Positionen für diesen zweiten Zinken ausgewählt ist, wobei die gewählte Position für die Verbindung des Kabels des ersten Zinkens bezüglich der gewählten Position für die Verbindung des Kabels des zweiten Zinkens in der Fortbewegungsrichtung versetzt ist.

## Claims

1. Tilling implement to be moved in a feed direction, comprising a plurality of spiked harrow teeth (3) angled in the feed direction, articulated such that they are tilted downwards on a chassis (2), being arranged in a plurality of lines and/or rows on the chassis (2), the teeth (3) being held in position by a spring system with variable pre-tensioning, **characterised in that** means (7; 71; 75) are provided for adjusting the pre-tensioning of each tooth independently of the pre-tensioning of the other teeth (3).

2. Implement according to claim 1, **characterised in that** the spring system with variable pre-tensioning comprises at least one spring (5) unique to each tooth (3), one end of which is connected to the tooth (3) and the other end being connected by a cable (6b) to the adjustment means (7; 71; 75), each cable (6b) being connected individually in a movable manner to the adjustment means (7; 71; 75), independently of the cables of the other teeth.

3. Implement according to claim 2, **characterised in that** the adjustment means comprise a tube (7) defining a plurality of possible connection points for each cable (6b).

4. Implement according to claim 3, **characterised in that** each connection point comprises at least one opening (7a; 7a'; 7b; 7b'; 7c; 7c') formed in the side surface of the tube (7).

5. Implement according to claim 4, **characterised in that** each connection point comprises two openings (7a; 7a'; 7b; 7b'; 7c; 7c') formed in the side surface of the tube (7).

6. Implement according to claim 4, **characterised in that** one (7a'; 7b'; 7c') of the two openings takes the form of an elongated slot and has larger dimensions than the other (7a; 7b; 7c) of the two openings.

7. Tilling implement according to any of claims 2 to 6, **characterised in that** each cable (6b) is connected to adjustment means (7; 71; 75) by a respective connecting element (8; 81; 82; 83; 84).

8. Tilling implement according to claim 2, **characterised in that** the adjustment means comprise a shaft (75) furnished with a plurality of discs with multiple holes (75a,75b,75c), each disc being associated with a cable.

9. Tilling implement according to either claim 7 or claim 8, **characterised in that** the connecting element is a carabiner (8), a shackle (81), an S-shaped hook (82), a quick-release link (83), or a hook (84) with an automatic safety latch.

10. Tilling implement according to any of the preceding claims, **characterised in that** it is a carried or pulled implement (1).

11. Method for cultivating soil by means of a tilling implement according to any of claims 2 to 10, in which the length of the first spring (5) of a first tooth (3) is adjusted manually to a different value than the length of the second spring (5) of a second adjacent tooth (3) by connecting the cable (6b) from the first tooth to the adjustment means, particularly to the adjustment tube, in a position selected from the plurality of possible positions for this first tooth, and by connecting the cable from the second tooth to the adjustment means in a position selected from the plurality of possible positions for this second tooth, the position selected for connecting the cable of the first tooth being offset in the feed direction in relation to the position selected for connecting the cable of the second tooth.
